(19) **Europäisches Patentamt**

**European Patent Office**

**Office européen des brevets**

(11) **EP 1 325 218 B1**

(12) **EUROPÄISCHE PATENTSCHRIFT**

(45) Veröffentlichungstag und Bekanntmachung des Hinweises auf die Patenterteilung:
**28.07.2004 Patentblatt 2004/31**

(51) Int Cl.$^7$: **F01N 11/00**, F01N 3/08

(21) Anmeldenummer: **01987842.0**

(86) Internationale Anmeldenummer:
**PCT/EP2001/011358**

(22) Anmeldetag: **02.10.2001**

(87) Internationale Veröffentlichungsnummer:
**WO 2002/033235 (25.04.2002 Gazette 2002/17)**

(54) **VERFAHREN UND VORRICHTUNG ZUM DIAGNOSTIZIEREN DER SPEICHEREIGENSCHAFTEN EINES NOx-SPEICHERKATALYSATORS**

METHOD AND DEVICE FOR DIAGNOSING THE STORING PROPERTIES OF A NOX STORAGE CATALYST

PROCEDE ET DISPOSITIF POUR DIAGNOSTIQUER LES PROPRIETES D'ACCUMULATION D'UN CATALYSEUR ACCUMULATEUR DE NO X?

(84) Benannte Vertragsstaaten:
**DE FR GB**

(30) Priorität: **14.10.2000 DE 10051012**

(43) Veröffentlichungstag der Anmeldung:
**09.07.2003 Patentblatt 2003/28**

(73) Patentinhaber: **Bayerische Motoren Werke Aktiengesellschaft**
**80809 München (DE)**

(72) Erfinder: **HASENCLEVER, Hanns-Christian**
**80809 München (DE)**

(56) Entgegenhaltungen:
**EP-A- 0 928 890        DE-A- 19 823 921**
**FR-A- 2 746 142        US-A- 5 483 795**

**Beschreibung**

Die Erfindung betrifft ein Verfahren sowie eine Vorrichtung zum Diagnostizieren der Speichereigenschaften eines NOx-Speicherkatalysators.

In den letzten Jahren wurde eine zunehmende Anzahl von Technologien zur Verbrennung von Kraftstoffen entwickelt, um die Kraftstoffausbeute zu optimieren, unter anderem die Magerverbrennungstechnologie. Hiernach wird Kraftstoff auf der mageren Seite eines stöchiometrischen Luft-Kraftstoff-Verhältnisses verbrannt, wodurch sich die Kraftstoffausbeute im Teillastbetrieb um bis zu 10% verbessert.

Bei der Verbrennung eines solchen mageren Gemisches erzeugt der Motor im Abgas große Mengen an NOx. Diese NOx-Emissionen müssen aus Umweltschutzgründen möglichst auf null reduziert werden. Deshalb ist die Abgasleitung mit einem NOx-Absorptions-Reduktionskatalysator ausgerüstet, um das Abgas von NOx zu reinigen. Der Katalysator arbeitet nicht kontinuierlich zum Abgasvolumen, sondern speichert die abgegebenen NOx-Emissionen ein. Der Katalysator ist also nach einem bestimmten absorbierten NOx-Volumen gesättigt. Die Zeitdauer bis zum Sättigungszustand ist abhängig von der Betriebsweise des Motors. Bei hohen Drehzahlen tritt dieser Zustand schneller, bei niedrigen Drehzahlen langsamer ein. Der Sättigungszustand wird in der Regel nach ca. 30 sec. und 120 sec. erreicht.

Um die Reinigungsfähigkeit des Speicherkatalysators wiederherzustellen schließt sich an die Speicherphase eine Regenerationsphase an, in welcher der Motor gezielt kurzzeitig, 2 bis 4 sec. lang im unterstöchiometrischen, einem sogenannten fetten, Luft-Kraftstoff-Verhältnis betrieben wird. Dabei werden die NOx-Emissionen durch erhöhte CO und HC-Emissionen reduziert.

Sobald alle Stickoxide im Speicherkatalysator reduziert sind, verlässt den Katalysator unreagiertes HC und CO. Dieses unterstöchiometrische Luft-Kraftstoff-Verhältnis misst ein stromabwärts vom Speicherkatalysator positionierter Sensor. Diese Technologie offenbart beispielsweise die WO-A-94-17291 und die DE 19823921A. Dies ist der Beginn einer neuen Speicherphase, in der der Motor im überstöchiometrischen, also mageren, Luft-Kraftstoff-Verhältnis betrieben wird.

Es besteht nun das Problem, dass ein NOx-Speicherkatalysator im Betrieb altert und sich seine Absorptionsfunktion gegenüber dem Neuzustand verschlechtert. Es ist deshalb Aufgabe der vorliegenden Erfindung, ein Verfahren und eine Vorrichtung zum Diagnostizieren der aktuellen Speichereigenschaften eines im Abgasweg eines Verbrennungsmotors angeordneten NOx-Speicherkatalysators bereitzustellen, womit in einfacher, präziser und zuverlässiger Weise die Speichereigenschaften des NOx-Speicherkatalysators ermittelbar ist, um so dessen Alterung beurteilen zu können.

Diese Aufgabe wird erfindungsgemäß gelöst durch ein Verfahren zum Diagnostizieren der Speichereigenschaften eines NOx-Speicherkatalysators, welcher im Abgasweg eines Verbrennungsmotors angeordnet ist und von welchem während einer Speicherphase NOx aus dem Abgas des Verbrennungsmotors gespeichert wird und während einer Regenerationsphase eine Katalyse des während der Speicherphase gespeicherten NOx durchgeführt wird, wobei während der Speicherphase eine Ist-Speicherzeitdauer ermittelt wird, wenigstens ein während der Ist-Speicherzeitdauer vorliegender Motorbetriebszustand erfasst wird, eine Referenz-Speicherzeitdauer mittels eines Betriebskennfeldes des NOx-Speicherkatalysators in Abhängigkeit von dem erfassten Motorbetriebszustand ermittelt wird und die Ist-Speicherzeitdauer mit der Referenz-Speicherzeitdauer verglichen wird.

Das Betriebskennfeld enthält im relevanten Betriebsbereich des Verbrennungsmotors die jeweilige Zeitdauer der Speicherphase eines neuen und intakten NOx-Speicherkatalysators bei verschiedenen Stationärpunkten in Abhängigkeit von mindestens einem Motorbetriebszustandsparameter. Aus dem Verhältnis der beiden Zeitdauern kann dann die aktuelle Speicherfähigkeit relativ zum ursprünglichen Zustand des Speicherkatalysators abgeleitet werden.

Nach einer bevorzugten Ausführungsform werden während der Speicherphase mehrere Motorbetriebszustände erfasst und die dazugehörigen, im Kennfeld gespeicherten Speicherzeitdauern unter Ermittlung der Referenz-Speicherzeitdauer gemittelt. Hierdurch kann die Gefahr verringert werden, dass eine Referenz-Speicherzeitdauer auf Basis eines solchen Motorbetriebszustands ermittelt wird, der kurzzeitig auftritt und von den vorangehenden und nachfolgenden Motorbetriebszuständen erheblich abweicht. Das Erfassen der Motorbetriebszustände und das Auslesen der im Betriebskennfeld zum aktuellen Motorbetriebszustand abgelegten Speicherzeitdauer erfolgen vorteilhafterweise in einem gewissen Zeittakt während der Speicherzeitdauer.

Nach einer Ausführungsform der Erfindung wird als Ist-Speicherzeitdauer die komplette Zeitdauer der Speicherphase erfasst. Indem die Zeitdauer der Speicherphase zu bestimmen ist, um Festzulegen, ab wann und bis wann der Speicherbetrieb des NOx-Katalysators zu beginnen bzw. zu dauern hat und ab wann und bis wann die Regenerationsphase zu beginnen bzw. zu dauern hat, bringt obige Ausführungsform den Vorteil mit sich, dass die Diagnose ohne diesbezüglich zusätzlichen Rechenaufwand und damit in noch einfacherer Weise durchführbar ist.

Nach einer Ausführungsform der Erfindung wird die Ist-Speicherzeitdauer als Zeitspanne ausgehend vom Vorliegen eines vorbestimmten NOx-Minimumwerts bis zum Erreichen eines vorbestimmten NOx-Maximumwerts im Abgas nach dem NOx-Speicherkatalysator erfasst. Hierbei kann die komplette Zeitdauer der Speicherphase entsprechend bestimmt werden, so dass sie gleich der Ist-Speicherzeitdauer ist, oder auch anders ermittelt werden, so dass die Ist-Speicherzeitdauer erfindungsgemäß im Speicherzeitintervall liegt.

Bei einigen NOx-Sensoren ist voriges Vorgehen jedoch nicht von Vorteil, da von ihnen bei niedrigen NOx-Werten, der NOx-Gehalt vom Amoniak-Gehalt ($NH_3$-Gehalt) sensorbedingt nur schwer unterscheidbar ist. Daher ist von solchen Sensoren, ein niedrig liegender Minimum-NOx-Gehalt nur schwer feststellbar. Insbesondere wegen derartiger NOx-Sensoren ist es nach einer Ausführungsform der Erfindung vorgesehen, dass die Zeitdauer der Speicherphase erfasst wird als Zeitspanne ausgehend vom Vorliegen einer vorbestimmten unterstöchiometrischen Abgaszusammensetzung bis zum Erreichen eines vorbestimmten NOx-Maximumwerts. Hierbei werden sowohl die Abgaszusammensetzung als auch der NOx-Maximumwert im Abgas nach dem NOx-Speicherkatalysator erfasst. Auch in diesem Falle kann die Zeitdauer der gesamten Speicherphase auf gleiche Weise bestimmt werden und damit gleich der erfassten Ist-Speicherzeitdauer sein. Die Abgaszusammensetzung wird vorteilhafterweise mittels einer Lambda-Sonde erfasst, welche als Messgröße den $O_2$-Partialdruck im Abgas nach dem NOx-Speicherkatalysator erfasst. Aus dem erfassten $O_2$-Partialdruck wird ermittelt, ob das Abgas die vorbestimmte unterstöchiometrische Zusammensetzung hat.

In der Praxis wird aufgrund Fahrerwunsch, insbesondere durch starkes Durchdrücken des Gaspedals, zum Beispiel für das Beschleunigen die magere Verbrennung abgebrochen und die fette und anschließend stöchiometrische Verbrennung bis zum Ende der Beschleunigungsphase durchgeführt. Die Beschleunigung kann aus den erfassten Motorbetriebszustandsparametern ermittelt werden.

Frühzeitig kann der Beginn einer Beschleunigungsphase auch durch die Gaspedalbewegung über einen zusätzlichen Gaspedalsensor erfasst werden. Die Ist-Speicherzeitdauer wird in diesem Fall vorteilhafterweise dadurch ermittelt, dass die Zeitspanne anstelle bis zum Erreichen eines vorbestimmten NOx-Maximumwerts bis zum Abbruch der Speicherphase erfasst wird und auf den Zeitpunkt des Erreichens des vorbestimmten NOx-Maximumwerts hochgerechnet wird. Der Abbruch erfolgt, wie oben dargelegt, falls die Motorlast einen vorbestimmten hohen Wert erreicht. Dies kann zum Beispiel aus den fortlaufend erfassten Motorbetriebszuständen ermittelt werden, oder es kann eine Annahme getroffen sein, dass, falls ein Gaspedalsensor eine schnelle und/oder weite Pedalbewegung nach unten registriert, eine solche Motorlast vorliegt, dass die Magerverbrennung abzubrechen ist.

Die Hochrechnung erfolgt insbesondere nach folgenden Überlegungen:

Die nach dem Katalysator messbare NOx-Emission folgt einer Exponentialfunktion vom Typ:

$$NOx(t)=c_i(1-e^{-\frac{t}{c_{ii}}})^{c_{iii}}.$$

Diese besitzt einen Wendepunkt. Der Grenzwert der NOx-Emission, bei dessen Überschreitung die Regeneration eingeleitet wird, liegt weit unterhalb des Wendepunktes. Bis zum Wendepunkt kann die Exponentialfunktion durch einen wie folgt berechenbaren Mittelwert einer quadratischen und einer kubischen Funktion angenähert werden:

$$NOx(t)=\frac{c_i}{2}(t^2+t^3)$$

Die hochgerechnete Zeitdauer ergibt sich damit bevorzugt aus folgender Formel:

$$t_{LIM}=\frac{t_{AB}}{2}(\sqrt{\frac{NO_{xLIM}}{NO_{xAB}}}+\sqrt[3]{\frac{NO_{xLIM}}{NO_{xAB}}}$$

Hierbei ist $NOx_{AB}$ die gemessene NOx-Emission zum Zeitpunkt $t_{AB}$ des vorzeitigen Speicherphasenabbruchs, wobei $t_{LIM}$ jenen Zeitpunkt darstellt, bis zu dessen Erreichen es gedauert hätte, bis der NOx-Emissions-Grenzwert $NOx_{LIM}$ bei ununterbrochenem, d.h. normalem, Weiterverlauf der Speicherphase erreicht bzw. überschritten worden wäre.

Als Motorbetriebszustände werden bevorzugt die Drehzahl sowie die relative Kraftstoffmasse und/ oder die dem Verbrennungsmotor zugeführte Luftmenge oder -masse erfasst.

Gemäß der Erfindung ist eine Vorrichtung zum Diagnostizieren der Speichereigenschaften eines NOx-Speicherkatalysators vorgesehen, der im Abgasweg eines Verbrennungsmotors angeordnet ist und von welchem während einer Speicherphase NOx aus dem Abgas des Verbrennungsmotors gespeichert wird und während einer Regenerationsphase eine Katalyse des während der Speicherphase gespeicherten NOx durchgeführt wird. Die Vorrichtung weist auf: einen NOx-Sensor, der in Richtung des Abgasflusses nach dem NOx-Speicherkatalysator angeordnet ist und von dem der NOx-Gehalt im Abgas nach dem NOx-Speicherkatalysator erfasst wird, einen oder mehrere Motorbetriebszustands-Sensoren, von denen zugehörige Motorbetriebsparameter erfasst werden, und eine Rechnervorrichtung, an welche der NOx-Sensor und der oder die Motorbetriebszustands-Sensor(en) angeschlossen sind und von welcher während der Speicherphase eine Speicherzeitdauer als Zeitspanne zwischen dem Vorliegen eines mittels des NOx-Sensors erfassbaren, vorbestimmten NOx-Minimumwerts bis zum Erreichen eines mittels des NOx-Sensors erfassbaren, vorbestimmten NOx-Maximumwerts ermittelt wird, eine Referenz-Speicherzeitdauer mittels eines Betriebskennfeldes des NOx-Speicherkatalysators in Abhängigkeit von den während der Speicherphase erfassten Motorbetriebszuständen ermittelt wird und die ermittelte Zeitdauer mit der ausgelesenen Referenz-Speicherzeitdauer verglichen wird.

Gemäß der Erfindung ist ferner eine Vorrichtung zum Diagnostizieren der Speichereigenschaften eines NOx-Speicherkatalysators vorgesehen, der im Abgasweg eines Verbrennungsmotors angeordnet ist und von welchem während einer Speicherphase NOx aus dem Abgas des Verbrennungsmotors gespeichert wird und während einer Regenerationsphase eine Katalyse des während der Speicherphase gespeicherten NOx durchgeführt wird. Die Vorrichtung hat einen NOx-Sensor, der in Richtung des Abgasflusses nach dem NOx-Speicherkatalysator angeordnet ist und von dem der NOx-Gehalt im Abgas erfasst wird. Sie weist ferner einen oder mehrere Motorbetriebszustands-Sensor(en), von denen zugehörige Motorbetriebsparameter erfasst werden, einen Abgaszusammensetzungssensor, der nach dem NOx-Speicherkatalysator angeordnet ist und von welchem im Abgas nach dem NOx-Speicherkatalysator Abgaswerte hinsichtlich einer unter- oder überstöchiomterischen Zusammensetzung des Abgases erfasst werden, und eine Rechnervorrichtung auf, an welche der NOx-Sensor, der oder die Motorbetriebszustands-Sensor(en) und der Abgaszusammensetzungssensor angeschlossen sind und von welcher die Zeitdauer der Speicherphase als Zeitspanne zwischen dem Vorliegen einer mittels des Abgaszusammensetzungssensors erfassbaren, vorbestimmten unterstöchiometrischen Abgaszusammensetzung bis zum Erreichen eines mittels des NOx-Sensors erfassbaren, vorbestimmten NOx-Maximumwerts ermittelt wird, eine Referenz-Speicherzeitdauer mittels eines Betriebskennfeldes des NOx-Speicherkatalysators in Abhängigkeit von den während der Speicherphase erfassten Motorbetriebszuständen ermittelt wird und die ermittelte Zeitdauer mit der ausgelesenen Referenz-Zeitdauer verglichen wird.

Die erstgenannte, erfindungsgemäße Vorrichtung eignet sich insbesondere für NOx-Sensoren, bei denen auch bei niedrigen zu messenden NOx-Werten eine präzise Unterscheidung zwischen dem NOx-Gehalt und dem $NH_3$-Gehalt gegeben ist; hierbei kann dann der nach dem NOx-Speicherkatalysator angeordnete Abgaszusammensetzungssensor entfallen. Mit der letztgenannten, erfindungsgemäßen Vorrichtung können auch solche NOx-Sensoren verwendet werden, die vorstehend genannte Voraussetzung nicht erfüllen. Der Abgaszusammensetzungssensor ist bevorzugt eine λ-Sonde, mittels welcher der $O_2$-Partialdruck im Abgas erfassbar ist, woraus das Luft-Kraftstoffverhältnis ermittelbar ist, so dass das Vorliegen einer unterstöchiometrischen oder überstöchiometrischen Verbrennung feststellbar ist.

Vorzugsweise sind der NOx-Sensor und der Abgaszusammensetzungssensor zu einem Kombi-Sensor zusammengefasst, insbesondere von einem einzigen Sensor gebildet. Ein solcher Sensor ist beispielsweise derart ausgebildet, dass er neben dem NOx-Wert auch einem dem Luft-Kraftstoffverhältnis entsprechenden Wert ausgibt. In diesem Falle entfällt ein separater Abgaszusammensetzungssensor nach dem NOx-Speicherkatalysator.

Vorzugsweise werden als Motorbetriebszustandsparameter die Drehzahl und die Motorlast gemessen. Die Motorlast wird insbesondere durch Erfassen des Luftdurchsatzes mittels eines Luftmengensensors oder eines Luftmassensensors und/oder durch Erfassen des Kraftstoffdurchsatzes mittels eines Kraftstoffmassen- oder Kraftstoffmengensensors ermittelt.

Der Beginn einer Beschleunigungsphase kann frühzeitig durch die Erfassung einer Gaspedalbewegung erkannt werden. Dieser Vorgang erfordert einen zusätzlichen Sensor. Die Speicherphase wird dann bei einem vorbestimmten Sensor-Messwert abgebrochen; dies entspricht sozusagen dem Fahrerwunsch. Der Beginn jeder Beschleunigungsphase wird zur Regeneration des NOx-Speicherkatalysators, unabhängig von dessen Speicherzustand, genutzt.

Das Verfahren und die Vorrichtung zum Diagnostizieren der Speichereigenschaften eines NOx-Speicherkatalysators haben den Vorteil, dass auf einfache und doch zuverlässige Weise der NOx-Speicherkatalysator auf Abweichungen bezüglich seiner ursprünglichen Speichereigenschaften überwachbar ist, um bei Überschreitung eines vorbestimmten Abweichungsmaximum rechtzeitig ausgewechselt werden zu können. Durch die Diagnose werden mögliche Ursachen für Unregelmäßigkeiten und Abweichungen schneller erkannt, was für den Service eine Zeit- und Kostenersparnis mitsichbringt. Das Diagnosesystem verlangt hierbei kaum Mehrkosten, Mehrgewicht, zusätzlichen Bauraum oder Installationsaufwand, da die Sensoren zur Steuerung der Magerverbrennungstechnologie zwar nicht alle zwingend erforderlich, aber vorteilhaft sind und eine Rechnervorrichtung in der Steuerungsvorrichtung des Verbrennungsmotors enthalten ist, welche bevorzugt zur Ausführung des erfindungsgemäßen Verfahrens mitverwendet wird.

Die Erfindung wird im Folgenden anhand eines Ausführungsbeispiel mit Bezug auf die Zeichnung erläutert. In der Zeichnung zeigen:

Figur 1 eine schematische Darstellung einer erfindungsgemäßen Vorrichtung zum Diagnostizieren der Speichereigenschaft eines NOx-Speicherkatalysators,

Figur 2 ein Schaubild zur Erläuterung des erfindungsgemäßen Verfahrens gemäß einer Ausführungsform der Erfindung anhand des Verlaufs des NOx-Gehalts im Abgas nach einem NOx-Speicherkatalysator, und

Figur 3 ein Schaubild zur Erläuterung des erfindungsgemäßen Verfahrens gemäß einer anderen Ausführungsform der Erfindung anhand des Verlaufs des NOx-Gehalts im Abgas nach einem NOx-Speicherkatalysator.

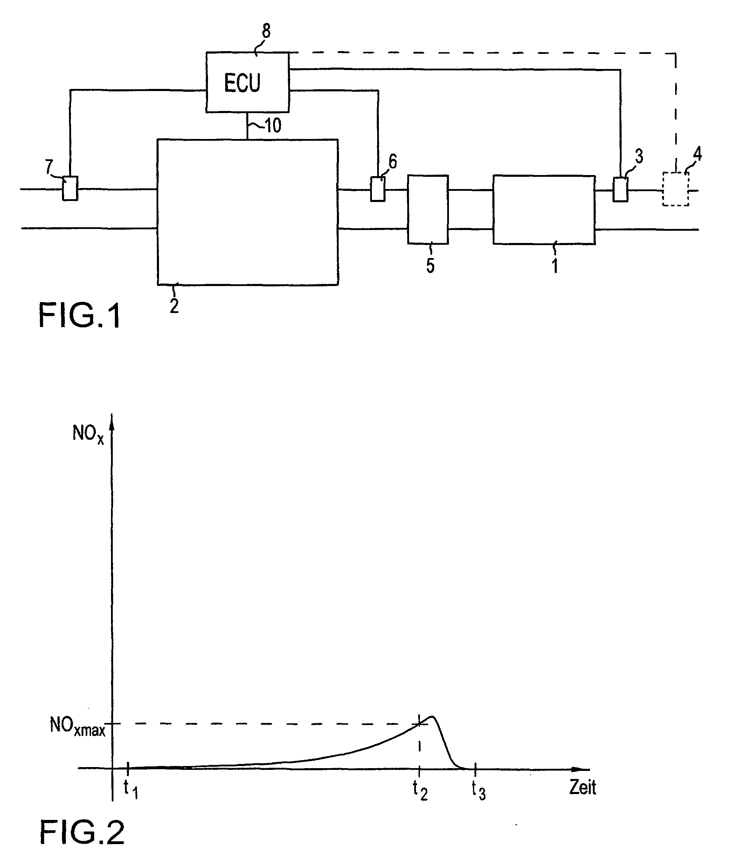

Gemäß der in Figur 1 gezeigten Ausführungsform der Erfindung ist eine Vorrichtung zur Analyse und Diagnose der Speichereigenschaften eines NOx-Speicherkatalysators 1 vorgesehen, der im Abgasweg eines Verbrennungsmotors 2, insbesondere eines Otto- oder Dieselmotors eines Kraftfahrzeugs, angeordnet ist und von dem das im Abgas enthaltene NOx bis zum Erreichen eines Speicher-Sättigungszustands speicherbar ist.

Die Diagnose-Vorrichtung hat einen NOx-Sensor 3, der im Abgasweg nach dem NOx-Speicherkatalysator 1 angeordnet ist und von dem der NOx-Gehalt im Abgas nach dem NOx-Speicherkatalysator 1 erfassbar ist. Die Vorrichtung hat ferner einen im Abgasweg nach dem NOx-Speicherkatalysator 1 angeordneten Abgaszusammensetzungssensor 4 in Form einer Lambda-Sonde ($\lambda$-Sonde), von welcher der $O_2$-Partialdruck im Abgas zur Ermittlung der Abgaszusammensetzung erfassbar ist. Im Abgasweg vor dem Speicherkatalysator 1 sind noch ein Vorkatalysator 5, von dem vorab HC und CO oxydiert und damit abgebaut werden, und eine andere Lambda-Sonde 6 angeordnet, über welche zur Steuerung des Verbrennungsmotors, insbesondere zur Einstellung und Regelung des Kraftstoff-Luft-Verhältnisses, die Abgaszusammensetzung im ungereinigten Abgas unmittelbar hinter dem Verbrennungsmotor ermittelt und an eine zugehörige Steuer-/Regeleinrichtung rückgeführt wird. Der NOx-Sensor 3 kann alternativ auch als Kombi-Sensor vorgesehen sein, von dem gleichzeitig der NOx-Gehalt sowie das Luft-Kraftstoff-Verhältnis erfassbar sind; in diesem Falle kann die separate Lambda-Sonde 4 nach dem NOx-Speicherkatalysator 1 entfallen. Die Diagnose-Vorrichtung hat ferner einen vor dem Verbrennungsmotor 1 angeordneten Luftmassensensor 7 zur Erfassung der dem Verbrennungsmotor zugeführten Luftmasse. Alternativ oder insbesondere zusätzlich zu dem Luftmassensensor 7 weist die Diagnose-Vorrichtung 1 einen Kraftstoffmassensensor auf. Die genannten Sensoren sind über zugehörige elektrische Verbindungsleitungen mit einer Rechnereinrichtung 8 (Electronic Control Unit - ECU) verbunden. Im Verbrennungsmotor 2 ist ferner ein nicht dargestellter Drehzahlsensor angeordnet, welcher der Motordrehzahl entsprechende Signale ausgibt, die über eine elektrische Verbindungsleitung 10 an die Rechnereinrichtung 8 übermittelt werden. Aus der erfassten Drehzahl und der erfassten Luftmasse und/oder der Kraftstoffmasse ermittelt die Rechnereinrichtung 8 die Motorlast. Die Rechnereinrichtung 8 ist hierbei bevorzugt als Teil einer Motorsteuereinrichtung vorgesehen, von welcher der Motor, insbesondere das Kraftstoff-Luft-Verhältnis, die Kraftstoffeinspritz- und ggf. Zündzeitpunkte sowie die zuzuführende Krafstoffmenge eingestellt werden.

Die Funktion der erfindungsgemäßen Vorrichtung zum Analysieren der Speichereigenschaften des Speicherkatalysators 1 ist wie folgt.

Wie aus Figur 2 ersichtlich ist, kann der NOx-Speicherkatalysator im Laufe seines Speicherbetriebs, in welchem er NOx speichert, immer weniger NOx aufnehmen, so dass der NOx-Gehalt, der von dem NOx-Sensor 3 nach dem Speicherkatalysator 1 erfasst wird, mit der Zeit ansteigt. Die Zeitspanne zwischen dem Beginn des Speicherns von NOx und dem Ende des Speicherns von NOx wird im Folgenden Speicherphase genannt. Zwischen dem Ende der Speicherphase und deren erneutem Beginn liegt eine Regenerationsphase, innerhalb welcher der Motor mit fettem Gemisch betrieben wird, wobei die unverbrannten Kohlenwasserstoffe mit dem im Speicherkatalysator gespeicherten NOx unter Oxydieren der Kohlenwasserstoffe und Reduzieren des NOx und Bildung von $N_2$ reagieren. Dies ist gemäß Figur 2 daran zu erkennen, dass der nach dem Speicherkatalysator 1 auftretende NOx-Gehalt abnimmt. Nach dem Abbau des im Speicherkatalysator 1 gespeicherten NOx kann erneut die Speicherphase beginnen.

Nach der Ausführungsform von Figur 2 beginnt die Speicherphase zu einem Zeitpunkt $t_1$ einer im Abgas nach dem NOx-Speicherkatalysator 1 vorliegenden, vorbestimmten unterstöchiometrischen Abgaszusammensetzung, die vom Abgaszusammensetzungssensor 4, d.h. in diesem Falle der Lambda-Sonde erfasst wird. Die Speicherphase dauert bis zu einem Zeitpunkt $t_2$, in dem ein vom NOx-Sensor 3 erfasster NOx-Wert einem vorbestimmten NOx-Maximumwert $NOx_{max}$ entspricht. In der Phase zwischen dem Zeitpunkt $t_2$ und einem Zeitpunkt $t_3$, in welchem der Abgaszusammensetzungssensor 4 erneut die vorbestimmte, unterstöchiometrische Zusammensetzung erfasst, wird der Speicherkatalysator 1 wie oben erläutert regeneriert. Die Speicherphase dauert je nach den Betriebszuständen die der Motor durchläuft zwischen 30 bis 120 sec. Die Regenerationsphase, d,h. jene Zeitspanne, in welcher der Motor mit fettem Gemisch gefahren wird, dauert in der Regel ca. 2 - 4 sec. Im Zeitpunkt $t_3$ ist dann sämtliches im NOx-Speicherkatalysator gespeichertes NOx reduziert, so dass der nachfolgend angeordnete Abgaszusammensetzungssensor 4 oder ggf. der Kombi-NOx-Sensor 3, welcher gleichzeitig als Abgaszusammensetzungssensor dient, die bei der Fettverbrennung eigentlich vorliegende, vorbestimmte unterstöchiometrische Zusammensetzung des Kraftstoff-Luft-Verhältnisses im Abgas erfasst, woraufhin die Rechnereinrichtung 8 zum Zeitpunkt $t_3$ die nächste Speicherphase startet.

Nach dieser Ausführungsform erfasst die Rechnereinrichtung 8 den Start- und den Endzeitpunkt $t_1$ bzw. $t_2$ der Speicherphase und ermittelt hieraus die Differenz, welche eine Ist-Speicherzeitdauer darstellt. Ferner ermittelt die Rechnereinrichtung 8 aus wenigstens einem während der Speicherphase und damit während der Ist-Speicherzeitdauer erfassten Motorbetriebszustand eine Referenzspeicherzeitdauer, welche bei einem normal funktionieren Speicherkatalysator jene Zeitspanne angibt, innerhalb welcher der Speicherkatalysator ab Beginn der Speicherphase seinen Speicher-Sättigungszustand bei dem erfassten Motorbetriebszustand erreichen würde.

Die Referenzspeicherzeitdauer wird aus einem Kennfeld abgelesen, welches auf Basis unterschiedlicher Motorbetriebszustände erstellt ist. Um die Referenzzeitspanne möglichst genau ermitteln zu können, werden bevorzugt mehrere Motorbetriebszustände während der Ist-Speicherzeitdauer erfasst und gemittelt, wobei die Referenz-Speicherzeitdauer gemäß dem Mittelwert der Motorbetriebszustände ermittelt wird.

Anschließend wird die Ist-Speicherzeitdauer mit der Referenzspeicherzeitdauer verglichen; falls die Differenz zu groß ist, wird ein Signal generiert, welches angibt, dass der NOx-Speicherkatalysator seine Aufgabe nicht mehr ausreichend erfüllt.

Zur Feststellung des oder der Motorbetriebszustände werden von der Rechnereinrichtung 8 die Signalwerte des Luftmassensensors 7, des Drehzahlsensors und ggf. des unmittelbar nach dem Verbrennungsmotor 2 angeordneten Abgaszusammensetzungssensors, d.h. in diesem Falle der Lambda-Sonde 6, herangezogen, aus welchen Signalwerten die Rechnereinrichtung 8 den zugehörigen Motorbetriebszustand, d.h. zum Beispiel die Motorlast und -drehzahl, ermittelt.

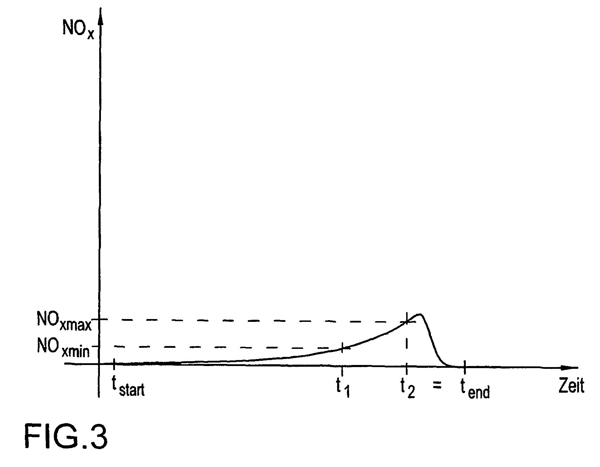

Obwohl gemäß der Ausführungsform nach Figur 2 als Ist-Speicherzeitdauer die komplette Dauer der Speicherphase herangezogen wird, kann die Ist-Speicherzeitdauer auch nur einen Abschnitt der Speicherphase darstellen. So wird beispielsweise gemäß der Ausführungsform nach Figur 3 die Ist-Speicherzeitdauer als innerhalb der Speicherphase liegende Zeitspanne $t_1 - t_2$ ab dem Vorliegen eines vorbestimmten NOx-Minimumwerts bis zum Erreichen NOx-Maximumwerts, jeweils nach dem Speicherkatalysator 1 erfasst, ermittelt. Der NOx-Maximumwert ist hierbei gleich jenem NOx-Wert, bei dessen Erreichen die Speicherphase beendet und die Regenerationsphase begonnen wird (Zeitpunkt $t_{end} = t_2$). Der vorbestimmte NOx-Minimumwert, der für die Berechnung der zu überprüfenden Ist-Speicherzeitdauer herangezogen wird, liegt jedoch in diesem Ausführungsbeispiel über jenem NOx-Wert, der zum Startzeitpunkt $t_{start}$ der Speicherphase vorliegt.

Die Motorbetriebszustände zur Berechnung der Referenzspeicherzeitdauer werden zwischen den Zeitpunkten $t_1$ und $t_2$ erfasst. Anschließend wird anhand des Kennfelds ermittelt, wie lange es bei einem neuwertigen NOx-Speicherkatalysator gedauert hätte (Referenzspeicherzeitdauer), bis ab dem Vorliegen des NOx-Minimumwerts $NOx_{min}$ der NOx-Maximumwert $NOx_{max}$ im Abgas nach dem Speicherkatalysator erreicht worden wäre. Ein Vergleich mit der tatsächlichen Ist-Speicherzeitdauer gibt Aufschluss über den Zustand des Speicherkatalysators. Beim Heranziehen eines NOx-Minimumwerts als Startpunkt für die Erfassung der Ist-Speicherzeitdauer besteht bei einigen NOx-Sensoren das Problem, das diese bei klein gewählten NOx-Minimumwerten nicht zwischen dem NOx-Gehalt und dem $NH_3$-Gehalt im Abgas unterscheiden können, so dass es zu Messfehlern kommen könnte. Daher wird bei dieser Ausführungsform vorteilhafterweise der NOx-Minimumwert nicht derart gewählt, dass er mit dem NOx-Gehalt zum Startzeitpunkt $t_{start}$ der Speicherphase zusammenfällt, sondern er wird größer gewählt.

## Patentansprüche

1. Verfahren zum Diagnostizieren der Speichereigenschaften eines NOx-Speicherkatalysators (1), welcher im Abgasweg eines Verbrennungsmotors (2) angeordnet ist und von welchem während einer Speicherphase NOx aus dem Abgas des Verbrennungsmotors (2) gespeichert wird und während einer Regenerationsphase eine Katalyse des während der Speicherphase gespeicherten NOx durchgeführt wird, wobei während der Speicherphase eine Ist-Speicherzeitdauer ermittelt wird, wenigstens ein während der Ist-Speicherzeitdauer vorliegender Motorbetriebszustand erfasst wird, eine Referenz-Speicherzeitdauer mittels eines Betriebskennfeldes des NOx-Speicherkatalysators (1) in Abhängigkeit von dem erfassten Motorbetriebszustand ermittelt wird und die Ist-Speicherzeitdauer mit der Referenz-Speicherzeitdauer verglichen wird.

2. Verfahren nach Anspruch 1, wobei während der Speicherphase mehrere Motorbetriebszustände erfasst werden und die zugehörigen, im Kennfeld gespeicherten Speicherzeitdauern unter Ermittlung der Referenz-Speicherzeitdauer gemittelt werden.

3. Verfahren nach Anspruch 1 oder 2, wobei als Ist-Speicherzeitdauer die komplette Zeitdauer der Speicherphase erfasst wird.

4. Verfahren nach einem der Ansprüche 1 bis 3, wobei die Ist-Speicherzeitdauer erfasst wird als Zeitspanne ausgehend vom Vorliegen eines vorbestimmten NOx-Minimumwerts bis zum Erreichen eines vorbestimmten NOx-Maximumwerts im Abgas nach dem NOx-Speicherkatalysator (1).

5. Verfahren nach einem der Ansprüche 1 bis 3, wobei die Ist-Speicherzeitdauer erfasst wird als Zeitspanne ausgehend vom Vorliegen einer vorbestimmten unterstöchiometrischen Abgaszusammensetzung bis zum Erreichen eines vorbestimmten NOx-Maximumwerts des bzw. im Abgas(es) nach dem NOx-Speicherkatalysator (1).

**6.** Verfahren nach einem der Ansprüche 1 bis 5, wobei fortlaufend der Motorbetriebszustand erfasst wird, bei Vorliegen eines einer vorbestimmten, hohen Motorlast entsprechenden Motorbetriebszustands die Speicherphase abgebrochen wird und die Ist-Speicherzeitdauer ermittelt wird, indem die Zeitspanne ausgehend vom Vorliegen eines vorbestimmten NOx-Minimumwerts oder vom Vorliegen einer vorbestimmten.unterstöchiometrischen Abgaszusammensetzung im bzw. des Abgas(es) bis zum Abbruch der Speicherphase erfasst wird und die erfasste Zeitspanne auf den Zeitpunkt des Erreichens eines vorbestimmten NOx-Maximumwerts hochgerechnet wird.

**7.** Verfahren nach einem der Ansprüche 1 bis 6, wobei zur Erfassung der Motorbetriebszustände die Drehzahl und die relative Kraftstoffmasse erfasst werden.

**8.** Vorrichtung zum Diagnostizieren der Speichereigenschaften eines NOx-Speicherkatalysators (1), der im Abgasweg eines Verbrennungsmotors (2) angeordnet ist und von welchem während einer Speicherphase NOx aus dem Abgas des Verbrennungsmotors (2) gespeichert wird und während einer Regenerationsphase eine Katalyse des während der Speicherphase gespeicherten NOx durchgeführt wird, mit einem NOx-Sensor (3), der in Richtung des Abgasflusses nach dem NOx-Speicherkatalysator (1) angeordnet ist und von dem der NOx-Gehalt im Abgas erfasst wird, einem oder mehreren Motorbetriebszustands-Sensoren, von denen zugehörige Motorbetriebsparameter erfasst werden, und einer Rechnervorrichtung (8), an welche der NOx-Sensor (3) und der oder die Motorbetriebszustands-Sensor(en) angeschlossen sind, **dadurch gekennzeichnet, daß** von der Rechnervorrichtung (8) während der Speicherphase eine Speicherzeitdauer als Zeitspanne zwischen dem Vorliegen eines mittels des NOx-Sensors (3) erfassbaren, vorbestimmten NOx-Minimumwerts bis zum Erreichen eines mittels des NOx-Sensors (3) erfassbaren, vorbestimmten NOx-Maximumwerts ermittelt wird, eine Referenz-Speicherzeitdauer mittels eines Betriebskennfeldes des NOx-Speicherkatalysators in Abhängigkeit von den während der Speicherphase erfassten Motorbetriebszuständen ermittelt wird und die ermittelte Zeitdauer mit der ausgelesenen Referenz-Speicherzeitdauer verglichen wird.

**9.** Vorrichtung zum Diagnostizieren der Speichereigenschaften eines NOx-Speicherkatalysators (1), der im Abgasweg eines Verbrennungsmotors (2) angeordnet ist und von welchem während einer Speicherphase NOx aus dem Abgas des Verbrennungsmotors (2) gespeichert wird und während einer Regenerationsphase eine Katalyse des während der Speicherphase gespeicherten NOx durchgeführt wird, mit einem NOx-Sensor (3), der in Richtung des Abgasflusses nach dem NOx-Speicherkatalysator (1) angeordnet ist und von dem der NOx-Gehalt im Abgas erfasst wird, einem oder mehreren Motorbetriebszustands-Sensor(en), von denen zugehörige Motorbetriebsparameter erfasst werden, einem Abgaszusammensetzungssensor (3; 4), der in Richtung des Abgasflusses nach dem NOx-Speicherkatalysator (1) angeordnet ist und von welchem Abgaswerte hinsichtlich einer unter- oder überstöchiomterischen Zusammensetzung des Abgases erfasst werden, und einer Rechnervorrichtung (8), an welche der NOx-Sensor (3), der oder die Motorbetriebszustands-Sensor(en) und der Abgaszusammensetzungssensor (3; 4) angeschlossen sind, **dadurch gekennzeichnet, daß** von der Rechnervorrichtung (8) die Zeitdauer der Speicherphase als Zeitspanne zwischen dem Vorliegen einer mittels des Abgaszusammensetzungssensors (3; 5) erfassbaren, vorbestimmten unterstöchiometrischen Abgaszusammensetzung bis zum Erreichen eines mittels des NOx-Sensors erfassbaren, vorbestimmten NOx-Maximumwerts ermittelt wird, eine Referenz-Speicherzeitdauer mittels eines Betriebskennfeldes des NOx-Speicherkatalysators in Abhängigkeit von den während der Speicherphase erfassten Motorbetriebszuständen ermittelt wird und die ermittelte Zeitdauer mit der ausgelesenen Referenz-Zeitdauer verglichen wird.

**10.** Vorrichtung nach Anspruch 9, wobei der NOx-Sensor (3) und der Abgaszusammensetzungssensor (4) in Form eines einzigen Sensors ausgebildet sind, von welchem sowohl der NOx-Gehalt als auch ein dem Kraftstoff-Luft-Verhältnis zugeordneter Wert erfassbar sind.

**11.** Vorrichtung nach einem der Ansprüche 8 bis 10, wobei die Rechnervorrichtung (8) derart ausgebildet ist, dass von ihr die Speicherphase abgebrochen wird, wenn mittels der Motorbetriebszustandssensoren erfasst wird, dass der Motor (2) in einem vorbestimmten, hohen Lastzustand ist, und dass von ihr die Zeitdauer der Speicherphase ermittelt wird, indem eine Zeitspanne zwischen dem Vorliegen eines mittels des NOx-Sensors (3) erfassbaren, vorbestimmten NOx-Minimumwerts oder dem Vorliegen einer mittels des Abgaszusammensetzungssensors (3; 4) erfassbaren, vorbestimmten unterstöchiometrischen Abgaszusammensetzung bis zum Abbruch der Speicherphase erfasst wird und auf den Zeitpunkt des Erreichens des vorbestimmten NOx-Grenzwerts hochrechnet wird.

**12.** Vorrichtung nach einem der Ansprüche 8 bis 11, wobei als Motorbetriebszustandssensoren ein Drehzahlsensor sowie ein Luftmassensensor (7) und/ oder ein Kraftstoffmassensensor vorgesehen sind.

**Claims**

1.  Method for diagnosing the storage properties of an NOx storage catalyst (1) which is arranged in the exhaust gas path of an internal-combustion engine (2) and by which NOx from the exhaust gas of the internal-combustion engine (2) is stored during a storage phase and, during a regeneration phase, a catalysis of the NOx stored during the storage phase is carried out, wherein, during the storage phase, an actual storage time period is determined, at least one engine operating state present during the actual storage time period is detected, a reference storage time period is determined by means of an operating characteristic map of the NOx storage catalyst (1) as a function of the detected engine operating state and the actual storage time period is compared with the reference storage time period.

2.  Method according to claim 1, wherein during the storage phase a plurality of engine operating states are detected and the associated storage time periods stored in the characteristic map are averaged with determination of the reference storage time period.

3.  Method according to claim 1 or 2, wherein the complete time period of the storage phase is detected as the actual storage time period.

4.  Method according to any one of claims 1 to 3, wherein the actual storage time period is detected as a time span proceeding from the presence of a predetermined NOx minimum value until a predetermined NOx maximum value is reached in the exhaust gas downstream from the NOx storage catalyst (1).

5.  Method according to any one of claims 1 to 3, wherein the actual storage time period is detected as a time span proceeding from the presence of a predetermined richer than stoichiometric exhaust gas composition until a predetermined NOx maximum value of the exhaust gas, or in the exhaust gas, is reached downstream from the NOx storage catalyst (1).

6.  Method according to any one of claims 1 to 5, wherein the engine operating state is continuously detected, the storage phase is terminated in the presence of an engine operating state corresponding to a predetermined high engine load and the actual storage time period is determined in that the time span is detected proceeding from the presence of a predetermined NOx minimum value or from the presence of a predetermined richer than stoichiometric exhaust gas composition in the exhaust gas, or of the exhaust gas until the termination of the storage phase and the detected time span is extrapolated up to the instant of reaching a predetermined NOx maximum value.

7.  Method according to any one of claims 1 to 6, wherein the rotational speed and the relative fuel mass are detected to detect the engine operating states.

8.  Device for diagnosing the storage properties of an NOx storage catalyst (1) which is arranged in the exhaust gas path of an internal-combustion engine (2) and by which NOx from the exhaust gas of internal-combustion engine (2) is stored during a storage phase and, during a regeneration phase, a catalysis of the NOx stored during the storage phase is carried out, with an NOx sensor (3) which is arranged in the direction of the exhaust gas flow downstream from the NOx storage catalyst (1) and by which the NOx content in the exhaust gas is detected, with one or more engine operating state sensors, by which associated engine operating parameters are detected, and a computer device (8) to which the NOx sensor (3) and the engine operating state sensor(s) are connected, **characterised in that** during the storage phase, a storage time period is determined by the computer device (8) as the time span between the presence of an NOx minimum value which can be detected by means of the NOx sensor (3) until a predetermined NOx maximum value which can be detected by means of the NOx sensor (3) is reached, a reference storage time period is detected by means of an operating characteristic map of the NOx storage catalyst as a function of the engine operating states detected during the storage phase and the determined time period is compared with the reference storage time period which is read out.

9.  Device for diagnosing the storage properties of an NOx storage catalyst (1) which is arranged in the exhaust gas path of an internal-combustion engine (2) and by which NOx from the exhaust gas of internal-combustion engine (2) is stored during a storage phase and, during a regeneration phase, a catalysis of the NOx stored during the storage phase is carried out, with an NOx sensor (3) which is arranged in the direction of the exhaust gas flow downstream from the NOx storage catalyst (1), and by which the NOx content in the exhaust gas is detected, with one or more engine operating state sensor(s), by which associated engine operating parameters are detected, an exhaust gas composition sensor (3; 4) which is arranged in the direction of the exhaust gas flow downstream from the NOx storage catalyst (1), and by which exhaust gas values are detected with respect to a richer than stoichiometric or leaner than stoichiometric composition of the exhaust gas, and a computer device (8) to which the NOx sensor (3), the motor operating state sensor(s) and the exhaust gas composition sensor (3; 4) are connected, **characterised in that** the time period of the storage phase is determined by the computer device (8), as a time span between the presence of a predetermined richer than stoichiometric exhaust gas composition which can be detected by means of the exhaust gas composition sensor (3; 5) until a predetermined NOx maximum value which can be detected by means of the NOx sensor is reached, a reference storage time period is determined by means of an operating characteristic map of the NOx storage catalyst as a function of the engine operating states detected during the storage phase and the determined time period is compared with the reference time period which is read out.

10. Device according to claim 9, wherein the NOx sensor (3) and the exhaust gas composition sensor (4) are designed in the form of a single sensor, by which both the NOx content and the value associated with the fuel/air ratio can be detected.

11. Device according to any one of claims 8 to 10, wherein the computer device (8) is designed in such a way that the storage phase is terminated by it when it is detected by means of the engine operating state sensors that the engine (2) is in a predetermined high load state, and that the time period of the storage phase is detected by the computer device, in that a time span is detected between the presence of a predetermined NOx minimum value which can be detected by means of the NOx sensor (3) or the presence of a predetermined richer than stoichiometric exhaust gas composition which can be detected by means of the exhaust gas composition sensor (3; 4) until the termination of the storage phase and is extrapolated up to the instant of reaching the predetermined NOx limit value.

12. Device according to any one of claims 8 to 11, wherein a rotational speed sensor and an air mass sensor (7) and/or a fuel mass sensor are provided as engine operating state sensors.

**Revendications**

1. Procédé pour diagnostiquer les propriétés d'accumulation d'un catalyseur accumulateur de NOx (1) disposé dans la conduite d'échappement d'un moteur à combustion interne (2) et qui sert à accumuler du NOx issu des gaz d'échappement du moteur à combustion interne (2) durant une phase d'accumulation et à réaliser, durant une phase de régénération, une catalyse du NOx accumulé durant la phase d'accumulation, selon lequel on détermine une durée d'accumulation réelle durant la phase d'accumulation, on saisit au moins un état de fonctionnement du moteur présent durant la durée d'accumulation réelle, on détermine une durée d'accumulation de référence au moyen d'une caractéristique de fonctionnement du catalyseur accumulateur de NOx (1) en fonction de l'état de fonctionnement du moteur saisi, et on compare la durée d'accumulation réelle à la durée d'accumulation de référence.

2. Procédé selon la revendication 1,
selon lequel
plusieurs états de fonctionnement du moteur sont saisis durant la phase d'accumulation et les durées d'accumulation correspondantes accumulées dans la caractéristique de fonctionnement sont moyennées en déterminant la durée d'accumulation de référence.

3. Procédé selon la revendication 1 ou 2,
selon lequel
la durée d'accumulation réelle saisie consiste en l'intégralité de la phase d'accumulation.

4. Procédé selon l'une des revendications 1 à 3,
selon lequel
la durée d'accumulation réelle saisie consiste en la période comprise entre l'instant où est présente une valeur minimale de NOx prédéterminée et l'instant où est atteinte une valeur maximale de NOx prédéterminée, dans les gaz d'échappement en aval du catalyseur accumulateur de NOx (1).

5. Procédé selon l'une des revendications 1 à 3,
selon lequel
la durée d'accumulation réelle saisie consiste en la période comprise entre l'instant où est présente une composition des gaz d'échappement sous-stoechiométrique prédéterminée et l'instant où est atteinte (dans les gaz d'échappement) une valeur maximale de NOx prédéterminée (des gaz d'échappement) en aval du catalyseur accumulateur de NOx (1).

6. Procédé selon l'une des revendications 1 à 5,
selon lequel
l'état de fonctionnement du moteur est saisi en continu, la phase d'accumulation est interrompue lorsqu'un état de fonctionnement du moteur correspondant à une charge du moteur prédéterminée élevée est présent, et la durée d'accumulation réelle est déterminée en saisissant la période comprise entre l'instant où est présente (dans les gaz d'échappement) une valeur minimale de NOx prédéterminée ou une composition des gaz d'échappement sous-stoechiométrique prédéterminée (des gaz d'échappement) et l'instant où la phase d'accumulation est interrompue, et en extrapolant la période saisie à partir de l'instant où l'on atteint une valeur maximale de NOx prédéterminée.

7. Procédé selon l'une des revendications 1 à 6, selon lequel
la saisie des états de fonctionnement du moteur saisis consiste en la vitesse de rotation et la masse relative du carburant.

8. Dispositif pour diagnostiquer les propriétés d'accumulation d'un catalyseur accumulateur de NOx (1) disposé dans la conduite d'échappement d'un moteur à combustion interne (2) et qui sert à accumuler du NOx issu des gaz d'échappement du moteur à combustion interne (2) durant une phase d'accumulation et à réaliser, durant une phase de régénération, une catalyse du NOx accumulé durant la phase d'accumulation, comportant un capteur de NOx (3) disposé dans la direction d'écoulement des gaz d'échappement en aval du catalyseur accumulateur de NOx (1) et servant à saisir le taux de NOx des gaz d'échappement, comportant un ou plusieurs capteurs de l'état de fonctionnement du moteur servant à saisir les paramètres de l'état de fonctionnement du moteur correspondants, et comportant un dispositif électronique (8) auquel sont raccordés le capteur de NOx (3) et le ou les capteurs de l'état de fonctionnement du moteur,
**caractérisé en ce que**
le dispositif électronique (8) détermine, lors de la phase d'accumulation, une durée d'accumulation consistant en la période comprise entre l'instant où est présente une valeur minimale de NOx prédéterminée saisissable par le capteur de NOx (3) et l'instant où est atteinte une valeur maximale de NOx prédéterminée, saisissable par le capteur de NOx (3), détermine une durée d'accumulation de référence au moyen d'une caractéristique de fonctionnement du catalyseur accumulateur de NOx en fonction des états de fonctionnement du moteur saisis lors de la phase d'accumulation, et compare la durée déterminée à la durée d'accumulation de référence lue.

9. Dispositif pour diagnostiquer les propriétés d'accumulation d'un catalyseur accumulateur de NOx (1) disposé dans la conduite d'échappement d'un moteur à combustion interne (2) et qui sert à accumuler du NOx issu des gaz d'échappement du moteur à combustion interne (2) durant une phase d'accumulation et à réaliser, durant une phase de régénération, une catalyse du NOx accumulé durant la phase d'accumulation, comportant un capteur de NOx (3) disposé dans la direction d'écoulement des gaz d'échappement en aval du catalyseur accumulateur de NOx (1) et servant à saisir le taux en NOx des gaz d'échappement, comportant un ou plusieurs capteurs de l'état de fonctionnement du moteur servant à saisir les paramètres de l'état de fonctionnement du moteur correspondants, comportant un capteur de composition des gaz d'échappement (3 ; 4) disposé dans la direction d'écoulement des gaz d'échappement en aval du catalyseur accumulateur de NOx (1) et servant à saisir des valeurs des gaz d'échappement relatives à une composition sous-stoechiométrique ou sur-stoechiométrique des gaz d'échappement, et comportant un dispositif électronique (8) auquel sont raccordés le capteur de NOx (3), le ou les capteurs de l'état de fonctionnement du moteur et le capteur de composition des gaz d'échappement (3 ; 4),
**caractérisé en ce que**
le dispositif électronique (8) détermine la durée de la phase d'accumulation consistant en la période comprise entre l'instant où est présente une composition des gaz d'échappement sous-stoechiométrique prédéterminée déterminable au moyen du capteur de composition des gaz d'échappement (3 ; 5) et l'instant où est atteinte une valeur maximale de NOx prédéterminée déterminable au moyen du capteur de NOx, détermine une durée d'accumulation de référence au moyen d'une caractéristique de fonctionnement du catalyseur accumulateur de NOx en fonction des états de fonctionnement du moteur saisis lors de la phase d'accumulation, et compare la durée déterminée à la durée d'accumulation de référence lue.

10. Dispositif selon la revendication 9, dans lequel
le capteur de NOx (3) et le capteur de composition des gaz d'échappement (4) sont conçus sous la forme d'un seul capteur pouvant saisir aussi bien le taux en NOx qu'une valeur associée au rapport air-carburant.

11. Dispositif selon l'une des revendications 8 à 10, dans lequel
le dispositif électronique (8) est conçu de telle manière qu'il peut interrompre la phase d'accumulation lorsque les capteurs de l'état de fonctionnement du moteur ont saisi un état de charge élevé prédéterminé du moteur (2) et de telle manière qu'il peut déterminer la durée de la phase d'accumulation au sens où est saisie une période comprise entre l'instant où est présente une valeur minimale de NOx prédéterminée déterminable au moyen du capteur de NOx (3) ou l'instant où est présente une composition des gaz d'échappement sous-stoechiométrique prédéterminée déterminable au moyen du capteur de composition des gaz d'échappement (3 ; 4) et l'interruption de la phase d'accumulation et au sens où est extrapolé l'instant où la valeur limite de NOx prédéterminée est atteinte.

12. Dispositif selon l'une des revendications 8 à 11, dans lequel
   les capteurs de l'état de fonctionnement du moteur prévus consistent en un capteur de la vitesse de rotation ainsi qu'un capteur de la masse d'air (7) et/ou un capteur de la masse de carburant.

FIG.1

FIG.2

FIG.3